# EUROPEAN PATENT APPLICATION

(11) **EP 4 227 349 A1**
(43) Date of publication of application: **16.08.2023**
(21) Application number: 22161218.7
(22) Date of filing: 09.03.2022
(51) Int. Cl.: C08J 5/18, B32B 5/02, B32B 27/12, D06N 3/00, C08J 3/22

(54) **TRANSLUCENT FILM CONTAINING PIGMENTS, PREPARATION METHOD, AND COMPOSITE STRUCTURE**

(30) Priority: 14.02.2022 PT 2022117794
(71) Applicant: TMG - Tecidos Plastificados e Outros Revestimentos para a Indústria Automóvel, S.A., 4770-583 São Cosme Vale (PT)
(72) Inventor: RODRIGUES ÁGUIA, António César, Vila Nova de Familicão 4770-583 São Cosme Vale (PT); DA SILVA RIBEIRO, Filipe Miguel, Vila Nova de Familicão 4770-583 São Cosme Vale (PT); GOMES DA SILVA, Helena Sofia, Vila Nova de Familicão 4770-583 São Cosme Vale (PT); DA ROCHA, Jessica Nion, Vila Nova de Familicão 4770-583 São Cosme Vale (PT); FARIA LAMEGO, José Luís, Vila Nova de Familicão 4770-583 São Cosme Vale (PT); CARVALHO DA SILVA, Luís Filipe, Vila Nova de Familicão 4770-583 São Cosme Vale (PT); SILVA MAIA, Tiago Filipe, Vila Nova de Familicão 4770-583 São Cosme Vale (PT)
(74) Representative: Strehl Schübel-Hopf & Partner

(57) **Abstract**

A method of preparing a translucent film comprising the steps of providing a thermoplastic polymer, using the polymer to prepare a first composition containing the polymer and a second composition containing the polymer, mixing the first composition and a pigment to obtain a masterbatch containing 1 mass% to less than 30 mass% of the pigment, mixing the second composition and the masterbatch to obtain a film raw material having a pigment content of 0.05 mass% to 4.0 mass%, and processing the film raw material to obtain the film; a translucent film having uniformly distributed pigments; a composite structure containing the film; and the used of the film and the composite structure as a coating in the interior of a vehicle.

## Description

### Field of the invention

The present invention relates to a method of preparing a translucent film, a translucent film having uniformly distributed pigments, a composite structure containing the film, and the use of the film and the composite structure as a coating for automotive interiors.

### Background art

DE 10 2018 217 565 A1 discloses a translucent film used as an artificial leather that can be backlighted. The translucent film contains a maximum of 2% of pigments to achieve sufficient color saturation on the one hand and sufficient light transmission on the other hand.

WO 2020/244449 A1 discloses a method of preparing a translucent film comprising mixing a resin composition containing a polyolefin and a rubber with 1-4 parts by weight of a masterbatch containing 50-70 parts by weight of non-polar resin and 30-50 parts by weight of toner and forming the translucent film. The non-polar resin is blended into the masterbatch to improve the dispersibility of the toner in the polymer composition and making the toner more uniform. Preferably, the resin composition is mixed with at least 2 parts by weight of the masterbatch to achieve the desired color hiding effect.

### Problem to be solved by the invention

The prior art does not disclose a translucent film containing pigments in highly uniform distribution to achieve a uniform color, hiding effect, and transmittance.

The problem underlying the present invention was to provide a method of preparing a translucent film containing uniformly distributed pigments, and translucent film obtainable by the method.

### Summary of the invention

The problem underlying the present invention was solved by providing a translucent film containing uniformly distributed pigments and by providing a method of preparing the translucent film.

The present invention is defined by the following points [1] to [15].
[1] A method of preparing a film having a thickness of 0.05 to 1.50 mm and having a light transmittance of at least 1 % at λₘₐₓ, wherein λₘₐₓ is the wavelength within the range of 400 nm to 700 nm of the maximum transmittance, the method comprising the following steps:
   (a) providing a polymer selected from at least one thermoplastic polymer;
   (b) using the polymer to prepare a first composition containing the polymer and a second composition containing the polymer; preferably, the first composition and the second composition prepared in step (b) consist of the polymer provided in step (a) and optional additives;
   (c) mixing the first composition and a pigment to obtain a masterbatch containing 1 mass% to less than 30 mass% of the pigment;
   (d) mixing the second composition and the masterbatch to obtain a film raw material having a pigment content of 0.05 mass% to 4.0 mass%; and
   (e) processing the film raw material to obtain the film.
[2] The method according to [1], wherein the first composition and the second composition prepared in step (b) have identical composition.
[3] The method according to [1] or [2], wherein the polymer provided in step (a) is one or more selected from the group consisting of a thermoplastic elastomer, a thermoplastic polyurethane, a thermoplastic polyolefin, and a polyvinyl chloride.
[3-1] In the method of [3], the polymer provided in step (a) is a thermoplastic polyurethane or a thermoplastic polyolefin or a composition of a thermoplastic polyolefin and a thermoplastic elastomer, and the first composition and the second composition prepared in step (b) consist of the polymer provided in step (a) and optional additives.
[4] The method according to any of the preceding points, wherein the first composition, the second composition, and the masterbatch contain the polymer provided in step (a) in molten form, and either mixing in step (d) is carried out in an extruder and processing in step (e) comprises extruding and solidifying the film raw material; or processing in step (e) comprises knife coating.[4-1] In the method of [4], step (c) comprises a step of mixing, preferably by using an extruder, the first composition in molten form and the pigment and a step of solidifying the mixture to obtain the masterbatch consisting of pellets containing the first composition and the pigment.
[4-2] The method according to any of the preceding points, wherein processing in step (e) comprises knife coating a composition containing polyvinyl chloride.
[5] The method according to any of the preceding points, wherein the film has a thickness of 0.1 to 1.0 mm and a light transmittance of at least 10 % at λₘₐₓ, the pigment content of the masterbatch is 2 mass% to 25 mass%, and the pigment content of the film is 0.05 mass% to 2.0 mass%.
[5-1] In the method of [5], the film has a thickness of 0.3 to 1.0 mm and a light transmittance of at least 25 % at λₘₐₓ, the pigment content of the masterbatch is 2 mass% to 25 mass%, and the pigment content of the film is 0.05 mass% to 1.0 mass%.
[5-2] In the method of [5], the film has a thickness of 0.3 to 1.0 mm and the pigment content of the masterbatch is 10 mass% to less than 30 mass%, and the pigment content of the film is 1.5 mass% to 4.0 mass%.
[5-3] The method of [1] to [5-2] additionally comprises using the film to prepare a composite structure.
[5-4] The method of [5-3] comprises forming a composite of the film as a cover layer and one or more additional layers or elements arranged at the underside of the cover layer, wherein an optional pattern layer is directly connected to the topside of the cover layer and/or wherein an optional lacquer layer having a thickness of 5 µm to 40 µm is directly coated on the topside of the cover layer.
[6] A film obtainable by the method of one of points [1] to [5-2].
[7] A film made of a polymer selected from at least one thermoplastic polymer, wherein the film has a thickness of 0.3 to 1.5 mm, a pigment content of 0.05 to 4.0 mass%, and a light transmittance of at least 1 % at λₘₐₓ, wherein λₘₐₓ is the wavelength within the range of 400 nm to 700 nm of the maximum transmittance, wherein the film has at least one of the following properties (i) to (iii):
   (i) the number of particles having a size of more than 1 µm in any surface area of 0.01 mm² of the film is less than 10, as measured by Scanning Electron Microscopy carried out by sputtering the sample for 60 s with pure gold using a Cressington Sputter Coater 180 Auto; treating the sample at high vacuum with electron beam at 10-20 keV using a SEM JEOLJSM 6010 LV; and detecting the secondary electrons;(ii) the ratio of the light transmittance at λₘₐₓ between any two areas of 1 mm² of the film is in the range of 9/10 to 10/9;
   (iii) if the pigment content is 2.5 to 4.0 mass%, the light transmittance at λₘₐₓ is at least 1 %; if the pigment content is more than 1.50 mass% to less than 2.5 mass%, the light transmittance at λₘₐₓ is at least 10 %; if the pigment content is less than 0.30 mass%, the light transmittance at λₘₐₓ is at least 40 %; if the pigment content is in the range of 0.30 mass% to 1.50 mass%, the product of the light transmittance (unit: %) at λₘₐₓ and the concentration of the pigment (unit: mass%) is more than 15.
[7-1] The film of [7], wherein the polymer is one or more selected from the group consisting of a thermoplastic elastomer, a thermoplastic polyurethane, a thermoplastic polyolefin, and a polyvinyl chloride.
[7-2] The film of [7-1], wherein the polymer is a thermoplastic polyurethane or a thermoplastic polyolefin or a composition of a thermoplastic polyolefin and a thermoplastic elastomer, and the film consists of the polymer and optional additives.
[7-3] The film of any of [7] to [7-2], wherein the film has a thickness of 0.1 to 1.0 mm and a light transmittance of at least 10 % at λₘₐₓ, and the pigment content of the film is 0.05 mass% to 2.0 mass%.
[7-4] The film of [7-3], wherein the film has a thickness of 0.3 to 1.0 mm and a light transmittance of at least 25 % at λₘₐₓ, and the pigment content of the film is 0.05 mass% to 1.0 mass%.
[7-5] The film of any of [7] ot [7-2], wherein the film has a thickness of 0.3 to 1.0 mm, and the pigment content of the film is 1.5 mass% to 4.0 mass%.
[8] The film according to any of [7] to [7-5], wherein the film has at least one of the following properties (i) to (iii):
   (i) the light transmittance of the film at λₘₐₓ is at least 10 % and the number of particles having a size of more than 1 µm in any surface area of 0.01 mm² of the film is less than 5, as measured by the Scanning Electron Microscopy carried out by sputtering the sample for 60 s with pure gold using a Cressington Sputter Coater 180 Auto; treating the sample at high vacuum with electron beam at 10-20 keV using a SEM JEOL JSM 6010 LV; and detecting the secondary electrons;
   (ii) the film has a thickness of 0.3 to 1.0 mm, the content of the pigment in the film is 0.05 to 1.0 mass%, the light transmittance of the film at λₘₐₓ is at least 20 %, and the ratio of the light transmittance at λₘₐₓ between any two areas of 1 mm² of the film is in the range of 19/20 to 20/19;
   (iii) the film has a thickness of 0.3 to 1.0 mm, the content of the pigment in the film is 0.05 to 1.0 mass%, the light transmittance of the film at λₘₐₓ is at least 20 %, and if the pigment content is less than 0.30 mass%, the light transmittance of the film at λₘₐₓ is at least 40 %; if the pigment content is in the range of 0.30 mass% to 1.0 mass%, the product of the light transmittance (unit: %) at λₘₐₓ and the concentration of the pigment (unit: mass%) is at least 15.
[9] The film according to any of [6] to [8], wherein the ratio of the number of particles having a size of more than 1 µm in any surface area of 0.01 mm² of the film to the pigment content (unit: mass%) is less than 10.
[10] The film according to any of [6] to [9], wherein the film is opaque in the absence of light emitted from the rear side.
[11] The film according to any of [6] to [10], wherein the product of the concentration of the pigment [mass%] and the thickness of the film [mm] is less than 1.0, preferably less than 0.5.
[12] A composite structure comprising the film as described in any of [6] to [11].
[12-1] The composite structure according to [12], comprising a textile layer as a support layer and the film.

[12-2] The composite structure according to [12-1], wherein the film is a PVC film.
[12-3] The composite structure according to [12-2], wherein the PVC film has been coated on the textile layer. Hence, the PVC film is directly connected to the textile layer.
[13] The composite structure according to [12], comprising the film as a cover layer and one or more additional layers or elements arranged at the underside of the cover layer, wherein an optional pattern layer is directly connected to the topside of the cover layer and/or wherein an optional lacquer layer having a thickness of 5 µm to 40 µm is directly coated on the topside of the cover layer.
[13-1] In a preferred composite structure of [13], the cover layer is selected to render the other layers of elements arranged at the underside of the cover layer invisible in the absence of light emitted from a light source arranged in or under the composite structure.
[13-2] A preferred composite structure of [13] comprises a pattern layer having (i) an opaque pattern, wherein the cover layer is selected to allow and the opaque pattern is selected to inhibit transmittance of visible light emitted from a light source arranged in or under the composite structure, or (ii) a colored pattern, wherein the cover layer and the colored pattern are selected to allow transmittance of visible light emitted from a light source arranged in or under the composite structure, wherein the cover layer and the colored pattern differ in color and/or light transmittance; or (iii) an opaque pattern and a colored pattern meeting the requirements of (i) and (ii).
[14] The composite structure according to [13], [13-1] or [13-2], comprising a pattern layer directly connected to the underside of the cover layer, and a support layer at the underside of the cover layer.
[15] The use of a film as described in any of points [6] to [12] or a composite structure as described in points [13] to [14] as a coating in the interior of a vehicle.

### Advantages of the invention

The film according to the present invention is translucent and has a uniform color and light transmittance. The film may have low light transmittance.

A composite structure may contain the film and structures such as layers or patterns under the film. The composite structure may have the property of making the structures invisible unless the structure is illuminated. Hence, the structures may be "hidden-until-lit".

The film and the composite structure can be applied to car interiors, such as car seats, armrests, door panels, dashboards and other parts, and can achieve good light transmittance while meeting desired color coverage.

### Description of the drawings

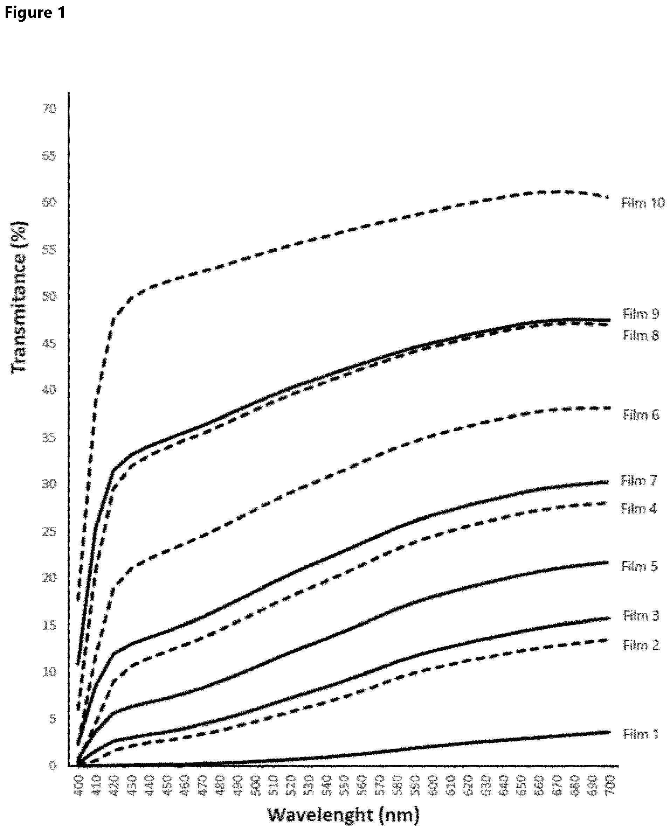

Figure 1 shows the light transmittance of the films prepared in the Examples.

### Embodiments of the invention

In the present invention, the terms "the film" and "the composite structure" refer to "the film according to the present invention" and "the composite structure according to the present invention", respectively, unless explicitly stated otherwise.

The composite structure may be defined by its visible side at the topside of the film, and its rear side at the underside of the film. A structure at the topside of a layer, e.g. the topside of the film, may be directly or indirectly connected to the topside of said layer, e.g. said film; and a structure at the underside of a layer, e.g. the underside of the film, may be directly or indirectly connected to the underside of said layer, e.g. said film. A direction within the same layer plane is referred to as horizontal direction, and a direction from a layer plane to another layer plane, in particular in the direction perpendicular to a layer plane, is referred to as vertical direction within the composite structure. The terms "above" and "under" relate to positions perpendicular to the plane of the film, the composite structure or a layer, wherein the positions face the topside and underside, respectively, of the film, composite structure or layer.

In the present invention, the meaning of the term "translucency" covers the meaning of "transparency". In general, transparency is the physical property of allowing light to pass through the material without being scattered. Translucency is a superset of transparency and allows light to pass through and allows scattering. In other words, a translucent medium allows the passage of light while a transparent medium not only allows the passage of light but also allows for image formation. Transparent materials appear clear.

Since the value of the light transmittance is affected by absorption, scattering, reflection and the like, the exact light transmittance values of the film may vary depending on the type of light source, the composition and thickness of the film. The light transmittance also differs for different wavelength ranges.

The light transmittance of the structures described in the present application, i.e. the individual layers or any of the composite structures, respectively, is determined as follows: Equipment: Datacolor, model 850; Lamp: Xenon. The total transmittance is measured according to the user's guide provided by the manufacturer. A white plaque (e.g. Spectralon^{®} plaque) is used as an optical standard for transmission calibration and measurement. The white plaque is placed at the front aperture plate. The sample to be measured, e.g. the film or the composite structure, is placed between the sphere opening and the sensor. In the present invention, the light transmittance of a layer structure, e.g. the film or the composite structure, is determined within the range of 400 to 700 nm at the wavelength λₘₐₓ of the maximum transmittance of the layer structure. The light transmittance [%] is defined as 100% x (transmittance value measured at λₘₐₓ in the presence of the layer structure)/(transmittance value measured at λₘₐₓ in the absence of the layer structure). The light transmission means the permeability for light emitted at a position facing the underside of the film and detected at a position facing the topside of the film. The light transmittance of the composite structure refers to the whole composite structure if all layers are translucent and the composite structure does not contain a light source between the cover layer and the support layer. The light transmittance of the composite structure refers to the layer composite facing the topside of a light source layer if such a light source layer is present.

In one embodiment, a translucent structure such as the film or the composite structure is defined in that a lighting system, e.g. a light source, having relatively low luminous power such as, e.g., a 0.5 watt LED allows achieving a luminance of the composite structure between 2 and 4 cd/m² (cd=candela) or even between 2 and 5 cd/m² and therefore suitable background lighting, wherein the elements arranged under the film are imperceptible as long as the lighting system is deactivated. This type of lighting is also referred to as hidden-until-lit. The luminance of the film or the composite structure may be 1 to 20 cd/m², preferably 2 to 20 cd/m², and more preferably 2 to 10 cd/m² or 2 to 8 cd/m².

The opposite property of translucency is opacity. The light transmittance of the opaque areas of the composite structure, e.g. the opaque areas of the pattern layer, may be less than 1%, preferably less than 0.1% and preferably 0% at λₘₐₓ of the composite structure. In any case, a "translucent" structure allows the transmittance of more visible light than an "opaque" structure, when light is emitted from the same light source and hits the structures. A structure, e.g. the opaque areas of a pattern layer, in the composite structure is referred to as opaque if its light transmittance is less than 10 %, preferably less than 5 %, of the light transmittance at λₘₐₓ of said composite structure. For instance, if the light transmittance of the cover layer is 10% the light transmittance of a layer contained in the same composite structure and referred to as "opaque" is less than 1%.

The light transmittance of the composite structure is ultimately defined by the composite of materials, wherein the light transmittance of the cover layer may be low to achieve the desired property of hiding the other elements when the light source is deactivated, i.e. the other elements are hidden-until lit. When the light source is deactivated, the topside of the composite structure has the appearance of a conventional structure.

A particularly natural appearance of the composite structure in daylight is achieved if the artificial leather appears opaque when viewed from the visible side in incident light. If the composite structure is backlit, the composite structure lights up. In this embodiment, the light permeability of the composite structure is preferably in the range from 0.4% to 30% at λₘₐₓ.

A special optical effect can be achieved in a further embodiment in which a structure of the textile carrier material can be seen from the visible side of the composite structure when the material is backlit from the rear. Further optical effects, both in daylight and when the film or composite structure is illuminated, can be achieved if the film or composite structure has a grain.

A color change effect that goes beyond the mere transillumination can be achieved in one embodiment in that the layer structure comprises at least a first and a second layer and the first and second layers have different color tones. In incident light, the color tone of the upper layer dominates, while for the viewer the mixed color from the different color tones appears when backlit.

As used herein, the singular forms "a," "an," and "the" may be intended to include the plural forms as well, unless the context clearly indicates otherwise. Structural elements and components are generally described in the singular form, e.g. "a" component or "containing a" component. Such singular form formulations are meant to include more than one of the indicated component or structural element, unless indicated otherwise. For instance, "a pigment" may a single species of pigments or a mixture of more than one species of pigments.

In the present invention, the standards and norms mentioned refer to the latest version available at the time this application was filed, unless indicated otherwise.

The terms "comprises," "comprising," "including," and "having," are inclusive and therefore specify the presence of stated features, steps, elements, and/or components, but do not preclude the presence or addition of one or more other features, steps, elements, components, and/or groups thereof. The method steps, processes, and operations described herein are not to be construed as necessarily requiring their performance in the particular order discussed or illustrated, unless specifically identified as an order of performance. It is also to be understood that additional steps may be employed.

In the present invention, Scanning Electron Microscopy (SEM) is carried out by sputtering the sample for 60 s with pure gold using a Cressington Sputter Coater 180 Auto; treating the sample at high vacuum with electron beam at 10-20 keV using a SEM JEOL JSM 6010 LV; and detecting the secondary electrons.

In the present invention, percentages (%) are percentages by mass (% by mass) unless explicitly indicated otherwise.

### The film

The film according to the present invention is translucent and has a thickness of 0.05 to 1.50 mm, preferably 0.3 to 1.0 mm. The film is compact, i.e. not foamed, having a density of at least 0.8 g/cm³. The film is flexible and may have a grain that may be geometric or may be intended to imitate natural leather.

The film comprises or consists of a polymer. The film may contain more than 90 mass% of the polymer and less than 10 mass% of a total of pigments and optional additives. The polymer as such, i.e. without any additives, must be translucent or transparent. The polymer is one or more selected from the group consisting of a thermoplastic elastomer (TPE), a thermoplastic polyurethane (TPU), a thermoplastic polyolefin (TPO), and a polyvinyl chloride (PVC). Preferred materials are TPU, TPO or PVC or composition containing TPE and TPO. The polyolefin resin in the polymer composition can be selected from various conventional polyolefins, preferably aliphatic polyolefins, such as low-density polyethylene LDPE, especially linear low-density polyethylene LLDPE, medium density polyethylene MDPE, polypropylene PP, and polybutene PB. Polyolefin resin helps to improve the physical and mechanical properties and heat resistance of the material. The polymer composition may contain a rubber that can be selected from thermoplastic dynamic vulcanized rubber TPV, EPDM rubber, SEBS, ethylene octene rubber, ethylene butene rubber, and ethylene propylene rubber. TPV such as vulcanized EPDM in a PP matrix may be preferred.

The optical properties of polymers are determined by their structure. Generally, amorphous polymers provide transparency while crystalline polymers provide opacity, particularly in thicker products such as injection molded end products. Crystallinity reduces the transparency by causing refraction and reflection of light and light scattering on the boundaries between the crystalline and amorphous regions. The light transmittance of semicrystalline polymers can be improved through additive technology. Polypropylene injection molded products can be made clearer by incorporation of clarifying agents. The very low-density polyethylene that can be made with metallocene catalysts will also exhibit improved clarity due to a decrease in the degree of crystallinity. Polypropylene provides high clarity due to its slower crystalline growth. Since polyethylene crystallizes very quickly, clarifying agents do not improve the clarity of polyethylene products even at lower thickness. Crystalline structures are generally very ordered and are thus strong and rigid. Typical polymers are "semi-crystalline" having a crystallinity of 10 and 80%. Examples of semi-crystalline polymers are linear polyethylene (PE) or isotactic polypropylene (PP). Amorphous polymers are flexible and elastic because of their random molecular structure that lets the chains move across each other. On the other hand, amorphous polymers are characterized by a relatively low resistance to heat, toughness at low temperatures and low dimensional stability. Hence, it may be preferred that the polymers are not too amorphous and have a certain degree of crystallinity. In the present invention, the degree of crystallinity may be adjusted to achieve a desired balance of optical properties and other physical properties such as flexibility and resistance to heat.

The light transmittance may be further increased by reducing the amount of oils in the polymer composition.

The optical properties of the film and the composite structure of the present invention are also determined by the distribution of the pigments in the polymer. In the present invention, the uniform pigment distribution provides a high light transmittance at a given pigment concentration.

The polymers used in the present invention are preferably resistant to UV irradiation. Since polymers possessing UV-absorbing groups such as aromatic rings are sensitive to UV degradation, the polymers used in the present invention preferably contain a very low concentration of aromatic rings, e. g. less than 5 % by weight, preferably less than 1 % by weight, more preferably less than 0.1 % by weight and most preferably 0 % by weight. In other words, the polymer are preferably non-aromatic.

The film can be manufactured in different ways, for example, by means of extrusion, knife coating, injection molding or sintering, vacuum molding, casting or rotational molding and other known processes. Preparing the film by extrusion may be preferred. Preparing the film by knife coating may be preferred in the case of PVC. The film may be smooth or grained to imitate e.g. natural leather. The grain may be produced before, during or after the molding process. The grain to imitate natural leather may have depths of 10 to 300 µm, preferably 20 to 100 µm.

Independent of the optional pattern layer, the film may have graphics or patterns applied to the topside or the underside of the film, e.g. by laser processing or etching.

The film may contain cork particles. These particles may be translucent, opaque or fluorescent. They may be visible or invisible when the light source is not activated.

To enable a hidden-until-lit property of hiding the elements arranged under the cover layer when no light source is activated, the light transmittance of the film is preferably 1 to 50%, more preferably 1 to 30%, still more preferably 2 to 20% or 5 to 10% at λₘₐₓ. In case a hidden-until-lit property is not desired, the light transmittance of the film may be 10 to 90%, preferably 20 to 80%, still more preferably 30 to 70% at λₘₐₓ.

### The pigments

Pigments are used in the method of the present invention and are contained in the film and the composite structure according to the present invention. The pigments may be selected from carbon black, organic red, organic yellow, phthalocyanine blue, titanium white, and the like. Different colors can be realized by adjusting the formula of the pigments. For example, when carbon black is used as the main pigment and titanium dioxide, chrome green, and iron red are added as auxiliary pigments, a polymer composition presents a black primary color when it is not exposed to light, and when irradiated with white light, purple light can be observed. In the case of carbon black as the main pigment, when titanium dioxide, chrome green, and indigo are added as auxiliary pigments, blue light can be transmitted when white light is irradiated on the back side.

To provide a translucent film having uniform color and high transparency, the pigments are preferably small. The particle size of the pigments is preferably less than 10 µm, more preferably less than 1 µm, even more preferably less than 100 nm. The use of small particles reduces or even excludes light scattering and renders the film more transparent. To that end, the particulate pigment may preferably have a size of less than 400 nm.

The film optionally contains additives. In the present invention, the additives are no polymers and do not fall within the definition of the pigments contained in the film. The additives may be particulate form, e.g., in the form of powder and/or particles. The additives may have a size of 0.01 µm to 10 µm, preferably 0.01 µm to 1 µm, more preferably 0.01 µm to 0.1 µm. Smaller sizes of the particulate form of the additives may be preferred to avoid or reduce light scattering. To that end, a size of less than 400 nm may be preferable. Additives may be antioxidants, light stabilizers, and flame retardants. The film may contain a stabiliser as an additive that contributes to the resistance of the film to aging at e.g. elevated temperatures. In particular, the stabilizer is a UV stabilizer and/or a heat stabilizer described in the following. Any other translucent layer of the composite structure may contain a stabilizer in an amount necessary to achieve the object of maintain the desired light transmittance after an aging treatment.

A UV stabiliser may be used. UV radiation ranges between wavelengths of 280 and 400 nm. Polymers are sensitive to certain wavelengths of UV radiation. For instance, polypropylene has three maxima at 290-300, 330 and 370 nm and a PVC homopolymer has a maximum at 320 nm. Other examples of UV sensitive polymers are polyethylene (300-310 nm, 340 nm), PVC copolymer (330 nm, 370 nm), and polyurethane (aromatic) (350-415 nm). Suitable UV stabilizers may be Ultraviolet Absorbers and Hindered Amine Light Stabilizers (HALS). Carbon black is a common UV absorber but can only be used in products of very low translucence. Rutile titanium oxide is effective in the 300-400 nm range but is not very useful in the very short wavelength UVB range below 315. Hydroxybenzophenone and hydroxyphenylbenzotriazole have the advantage of being particularly suitable for transparent applications. Other UV absorbers include oxanilides for polyamides, benzophenones for PVC and benzotriazoles and hydroxyphenyltriazines. Hindered Amine Light Stabilizers (HALS) share the 2,2,6,6-tetramethylpiperidine ring structure. HALS are particularly effective in polyolefins and polyurethane. Any of these compounds may be combined. Some of these combinations have synergistic effect. For example, benzotriazoles are often combined with HALS to protect pigmented systems from fading and color changes.

A heat stabilizer as an additive for polymers increases the overall ability of a polymer to withstand the negative effects of exposure to heat/high temperatures. Heat stabilizers help preserve the properties of a polymer, e.g. the appearance, strength, elasticity, durability and performance characteristics. The choice of a heat stabilizer largely impacts the final desired physical properties as well as the processing method used to form the product. Depending upon the type of oxidation, various heat stabilizers like metallic salts (stabilize PVC), organometallic compounds, non-metallic organic stabilizers, organophosphites and epoxies can be used. Organophosphites protect polymers during the manufacturing process. Phenolic antioxidants protect the polymer during its usable life. Phenolic antioxidants are radical scavengers which prevent thermal degradation of polymers. Their effectiveness increases when used in combination with phosphites, thioethers and light stabilizers. Other examples of antioxidants are sterically hindered phenols such as butylated hydroxytoluene (2,6-di-tert-butyl-4-methylphenol, BHT), butylated hydroxyanisole (BHA), tertiary-butylhydroquinone (TBHQ) and gallates. In particular, halogenated polymers such as poly(vinyl chloride) (PVC) require the use of heat stabilizers. In PVC, heat stabilizers must accomplish several functions, including neutralizing hydrogen chloride, replace weakened carbon-chlorine bonds, and prevent oxidation.

### The composite structure

The composite structure according to the present invention comprises layer structures, such as the film and the support layer, and is a layer structure itself. The planes of the layers are parallel to each other. The composite structure preferably has a total thickness of 0.3 to 5.0 mm, more preferably 0.5 to 2.0 mm. The composite structure is preferably flexible and soft and may have a grain. The grain may be geometric or may be intended to imitate natural leather.

The composite structure contains the film according to the present invention as a mandatory layer. The cover layer of the composite structure consists of one or more layers falling within the definition of the film, preferably, the cover layer consists of the film. Hence, the above description in relation to the film fully applies to the cover layer. Accordingly, the cover layer has a thickness of 0.05 to 1.50 mm and a light transmittance of at least 1 % at λₘₐₓ.

The various translucent layers of the composite structure may differ in the respective light transmittance. For instance, the light transmittance of the composite structure through the translucent areas in perpendicular direction may be 1 to 50%, preferably 1% to 30%, more preferably 2 to 20% and even more preferably 5 to 10% at λₘₐₓ.

The composite structure may contain the following structures: (1) the film according to the present invention, (2) a support layer, (3) a pattern layer, (4) a light source layer. The composite structure may be a structure of the following embodiments (i) to (viii) having the indicated layers in the given order: (i) (1)/(2); (ii) (1)/(3)/(2); (iii) (3)/(1)/(2); (iv) (3)/(1)/(3)/(2); (v) (1)/(4)/(2); (vi) (1)/(3)/4)/(2); (vii) (3)/(1)/(4)/(2); (viii) (3)/(1)/(3)/(4)/(2). The composite structure of any embodiment (i) to (viii) may contain a lacquer layer on the topside of the film (1). The composite structures not containing a light source layer have to be translucent in vertical direction in sections not covered by the pattern to allow transillumination using a backlight. In any one of the embodiments (i) to (viii), other layers such a sensor layer and/or a soft layer may be contained between the pattern layer (3) and the support layer (2). In any one of the embodiments (i) to (viii), the topside of the cover layer may be covered with a lacquer layer and/or the topside of the cover layer may have a grain.

The cover layer may consist of one or more compact layers. In the present invention, a compact layer has a density of more than 0.80 g/cm³, and a foam layer has a density of less than 0.80 g/cm³. The cover layer may be a single layer or a composite layer structure consisting of e.g. two or three layers directly connected to each other, wherein each layer falls within the definition of the film according to the present invention. By omitting a foamed layer in the layer structure, the light scattering can be reduced and the transmission properties of the artificial leather can thus be improved. By dispensing with foamed layers, which have a yellowish color due to the light scattering, it is possible to achieve a pure white transillumination. In addition, the light permeability of the layer structure is heavily dependent on any changes in the thickness of the layer. Since the thickness of compact layers is easier to control in terms of process technology than that of foamed layers, dispensing with foamed layers simplifies process management and increases process reliability.

The underside layers such as the support layer may have a higher light transmittance than the cover layer, e.g. up to 90%. A combination of such an underside layer and the cover layer may result in a light transmittance of the whole composite structure of 5% to 10% at λₘₐₓ.

In case the film or the composite structure is frequently touched by a user, the uppermost layer of the composite structure should be selected to have high abrasion resistance. In particular, the lacquer layer preferably has high abrasion resistance.

The composite structure optionally contains a pattern layer. In the present invention, the term "pattern" collectively refers to an opaque or colored pattern. Preferably, the pattern layer is an opaque or colored mask. The pattern layer may be an opaque layer having an opaque pattern and a translucent area. The pattern layer may be a colored layer having a colored pattern and a translucent area. The opaque areas and/or colored areas and/or the translucent areas of the pattern layer may form a graphic design, image, or logo. For example, decorative patterns or indicative patterns may be applied. The various opaque areas of a pattern layer may have different properties such as thickness, translucence, or color. The opaque or colored areas of the pattern layer may be discontinuous and thus do not have to be connected to each other. The pattern areas may be large pattern areas and/or relatively thin graphics such as letters, symbols, or frames. The colored pattern may differ from the cover layer in the light transmittance and/or the color. The light transmittance of the colored pattern and the cover layer may be the same or different. In the latter case, the pattern appears brighter or darker when the light source is activated. The colored pattern may have a color that differs from the color of the cover layer. Thus, the composite structure has two colors when the light source is activated. The use of a colored pattern makes it possible to prepare a film having a colored pattern within an illuminated area or an illuminated pattern within a colored area. This is to simplify the user's orientation and may draw the user's attention to the illuminated area that includes a pattern differing in its color from the illuminated area. Thus, a colored pattern may be advantageous over an opaque pattern allowing only a black image. In a preferred embodiment, the composite structure contains a cover layer and a pattern layer, wherein the structures under the cover layer and/or the pattern layer are hidden-until-lit. Depending on the position of the pattern layer in the layer arrangement of the composite structure, the pattern layer can always be seen, e.g., if placed on the topside of the cover layer, or only be seen when the composite structure is lit, e.g., if placed on the underside of the cover layer.

Examples for applying the pattern are inkjet printing, screen printing, laser printing, laser etching or by means of a paint application with the aid of a mask or the like. Inkjet printing and screen printing are preferred. The pattern layer may be provided on any topside or underside of any layer that is illuminated, e.g. any layer that superimposes the light source. In particular, the pattern layer may be directly connected to the topside and/or underside of the cover layer by printing the pattern layer onto the surface of the cover layer.

The translucent area of the pattern layer may simply be a void area surrounded by an opaque or colored part, i.e. an area where no opaque or colored part is arranged, e. g. a mask. In that case, a structure arranged directly at the underside of the pattern layer, e.g. a sensor layer or a light source layer, is in direct contact with cover layer in the translucent area.

The pattern layer may also be a film, preferably made of a polymer, that is applied onto another layer. The opaque or colored areas may be provided by dyeing a translucent film with a dye conferring opacity or color to the dyed areas of the film. In one embodiment, this film may contain elements such as a sensor or electric parts, e.g. those necessary for the sensor area to serve its function. In case the translucent area of the pattern layer is not simply a void area, it may be made of the material of the pattern layer and may be the area that has not been rendered opaque or colored. The light transmittance of the translucent area is not limited and may be 1 to 100%, preferably 10 to 90% and more preferably 50 to 90% at **λ**ₘₐₓ.

The material of the pattern layer is not limited. The pattern layer may be made of a compact layer or a soft layer, e.g. a foam layer or any other soft material, e.g. a textile layer. The opaque or colored areas may be dyed, particularly in the case of a foam or a textile. The material of the pattern layer may be a plastisol, which is a suspension of PVC or other polymer particles in a liquid plasticizer. A plastisol flows as a liquid and can be poured into a heated mold. When heated, the plastic particles dissolve and the mixture turns into a gel of high viscosity that usually cannot be poured anymore. On cooling, a flexible and permanently plasticized solid product results. A plastisol can be used as an ink for screen-printing, and is particularly useful for printing opaque or colored graphics. Plastisol inks may be cured. In one embodiment, the pattern layer not only serves the function of providing opaque or colored and translucent areas. The material of the pattern layer, which is preferably dyed, may be soft and may thereby contribute to the desired haptics of the composite structure. In that case, the soft material, e.g. a foam or textile, has to be selected to show, in the areas not dyed, suitable light transmittance and other desired properties, e.g. low light scattering and/or visibility or non-visibility of structural elements of the foam or textile upon illumination. In a preferred embodiment, the polymer material of the pattern layer and the cover layer is the same.

The composite structure optionally contains a light source. The light source serves the purpose of illuminating the translucent areas of the composite structure and to indicate the location of an element such as a sensor. Thus, the light source simplifies the user's orientation or draws the user's attention to the illuminated area when the light source is activated. The light source may be (i) arranged at the underside of the composite structure; or (ii) contained in the composite structure; or (iii) positioned in a distance from the composite structure, in which case the light source is not part of the composite structure. In all cases, the beams of light source pass at least some of the layers of the composite structure in vertical direction. It is essential that the translucent areas and elements are aligned to allow this vertical light transmission.

In case the light source is arranged within the composite structure, it is superimposed by the cover layer and the pattern layer. It may or may not be superimposed by other layers such as a sensor layer. If it is superimposed by the sensor layer, the light beams emitted from light source pass the layers of the composite structure in vertical direction. If the light source is contained in a layer such as a sensor layer, the light beams emitted from light source pass the layer in horizontal direction, e.g. through a light conductor, e.g., to illuminate the sensor. Then, the light beams are deflected, e.g. by means of light scattering elements contained in the layer to exit the composite structure in vertical direction.

The technology for the light source is not limited. A broad variety of different technologies can be used as light source used in the present invention and may comprise the following technologies: Light-conducting panels of PMMA or other optically effective polymers that are coupled to one or more LEDs; polyoptic fibers processed into fabrics in order to form flexible, ductile room lighting that is subsequently coupled to one or more LEDs; background lighting integrated into the support with integral optical structures; OLEDs, i.e. organic LEDs; electroluminescent components such as films or panels. The light source may preferably be an LED or an electroluminescence element. An LED module may be arranged on the underside of the support layer and coupled to a background lighting device. The LED module and the background lighting device may jointly form the light source. The background lighting device may be in the form of a textile layer of PMMA, a light-conducting panel or light-conducting film, a light box or a background lighting device that may be integrated into the support layer. The LED may be arranged in the sensor layer and connected to the area to be illuminated via an optical conductor, which may be a transparent foil and may contain a POF (plastic optical fiber). The LED or electroluminescence element may have thicknesses of less than 100 µm.

The composite structure may contain a support layer. The thickness of the support layer is preferably 0.1 to 3.0 mm, more preferably 0.3 to 2.0 mm. The support layer may or may not be translucent, and it may be a flexible and/or soft or a rigid and/or hard material. In one embodiment, the support layer is transparent, flexible and soft. The support layer may be a textile layer, a spacer fabric, or a foam such as a polyolefin foam. The textile carrier material may be, for example, a woven fabric, a nonwoven or a knit fabric. The textile layer may be made of recycled, synthetic or natural fibres. Natural fibers may be cotton. Chemical fibers may be polyamide, polyester or glass fibers. The material and the thickness of the material has to be selected depending on the desired property of the layer, e.g. translucency. In some embodiments, the support layer is translucent only in areas thereof. In examples of this embodiment, a translucent support layer may be provided with an opaque area in an area not to be illuminated, for example, by providing a support layer with an opaque coating or paint layer. The support layer may be a soft layer that contributes to the desired softness and haptics of the composite structure. The soft layer may be a foam or a textile and may have a Shore A hardness in the range from 60 to 80. Preferably, the foam layer is made of polyolefin, in particular polypropylene, and has a density of 0.05 to 0.5 g/cm³.

The cover layer and the support layer can be composited together by hot pressing or can be bonded together by glue. The support layer may be in direct contact with the cover layer. This means that no other layer or adhesive is present between the support layer and the cover layer. However, it is preferred that an adhesive layer is arranged between the support layer and the cover layer.

The composite structure may contain a lacquer layer. The lacquer layer is preferably colorless and transparent. It may be a conventional material based on polyurethane. It may be arranged as a surface layer on the cover layer, or it may be a surface layer on a pattern layer that is arranged on the cover layer. The thickness of the lacquer layer may preferably be 1 to 30 µm, more preferably 3 to 10 µm. The lacquer layer preferably improves the gloss, feel, light resistance, heat resistance, dirt resistance, abrasion resistance, scratch resistance and other functionalities of the composite structure.

### Method of preparing the film

The present invention provides a method of preparing a film having a thickness of 0.05 to 1.50 mm and having a light transmittance of at least 1 % at λₘₐₓ, wherein λₘₐₓ is the wavelength within the range of 400 nm to 700 nm of the maximum transmittance, the method comprising the following steps:
(a) providing a polymer selected from at least one thermoplastic polymer;
(b) using the polymer to prepare a first composition containing the polymer and a second composition containing the polymer; preferably, the first composition and the second composition prepared in step (b) consist of the polymer provided in step (a) and optional additives;
(c) mixing the first composition and a pigment to obtain a masterbatch containing 1 mass% to less than 30 mass%, preferably 1 mass% to 25 mass% of the pigment;
(d) mixing the second composition and the masterbatch to obtain a film raw material having a pigment content of 0.05 mass% to 4.0 mass%, preferably 0.05 mass% to 2.0 mass%; and
(e) processing the film raw material to obtain the film.

In step (a), the polymer may be one or more selected from the group consisting of a thermoplastic elastomer, a thermoplastic polyurethane, a thermoplastic polyolefin, and a polyvinyl chloride. The specific polymers are described above. The polymer may be a thermoplastic polyurethane or a thermoplastic polyolefin or a composition of a thermoplastic polyolefin and a thermoplastic elastomer.

In step (b), the first composition and the second composition may consist of more than 90 mass%, preferably more than 95 mass% of the polymer provided in step (a) and less than 10 mass%, preferably less than 5 mass% of at least one additive described above. The first composition and the second composition prepared in step (b) may be prepared by splitting a polymer composition to have identical composition. The polymer may be in particulate form, e.g., in the form of granules or pellets. The first composition and the second composition may contain a blend of the particulate polymer and the particulate additives.

In step (c), mixing the first composition and a pigment to obtain a masterbatch may be carried out by mixing the particulate polymer or the blend obtained in step (b) with the particulate pigment described above to obtain a blend of the particulate polymer, the particulate pigment, and, if present, the additive. Alternatively, mixing the first composition and a pigment to obtain a masterbatch may be carried out by mixing, preferably by using an extruder, the first composition in molten form and the pigment and solidifying the mixture to obtain the masterbatch containing or consisting of particles, e.g., granules or pellets, consisting of the polymer, the pigment, and, if present, the additive.

In step (d), mixing the second composition and the masterbatch to obtain a film raw material is preferably carried out in an extruder. The second composition and the masterbatch are preferably melted and mixed in an extruder to achieve a uniform distribution of the polymer, the pigment, and, if present, the additive in the film raw material.

In step (e), the film raw material that is preferably present in molten form in an extruder is extruded on a carrier in the form of a film and is solidified by cooling to obtain the film of the present invention.

In one embodiment, the preparation of the masterbatch containing or consisting of particles consisting of the polymer, the pigment, and, if present, the additive in step (c) is carried out using an extruder, and the preparation of the film raw material in step (d) is carried out using an extruder.

The following Examples show that a film prepared according to the method of the present invention has the advantageous property that it has a light transmittance that is higher than the light transmittance of a film prepared by using a masterbatch having a high pigment content.

### Examples

### Example 1

Polyethylene and a pigment composition composed of titanium dioxide, carbon black, indian red oxide and brown 24 were used to prepare the masterbatches shown in Table 1.

**Table 1**

| Masterbatch | Pigment content (mass%) |
|---|---|
| MB-A | 47.1 |
| MB-B | 35.5 |
| MB-C | 22.2 |

Masterbatch MB-C falls within the scope of the present invention. Masterbatches MB-A and MB-B represent conventional masterbatches and are used for comparison.

Masterbatches MB-A, MB-B, and MB-C were used to prepare films having different contents of pigment, as shown in Tables 2 to 4. All films had a maximum light transmittance **λ**ₘₐₓ at 700 nm.

**Table 2**

| | TPO recipe (pbm) | MB-A (pbm) | MB-C (pbm) | Pigment content in the film (mass%) |
|---|---|---|---|---|
| Film 1 | 100 | 4.40 | 0 | 1.98 |
| Film 2 | 100 | 0 | 10.00 | 2.02 |
| Film 3 | 100 | 2.25 | 0 | 1.04 |
| Film 4 | 100 | 0 | 5.00 | 1.04 |
| Film 5 | 100 | 1.82 | 0 | 0.84 |
| Film 6 | 100 | 0 | 4.00 | 0.85 |
| Film 7 | 100 | 0.93 | 0 | 0.43 |
| Film 8 | 100 | 0 | 2.00 | 0.43 |
| Film 9 | 100 | 0.24 | 0 | 0.10 |
| Film 10 | 100 | 0 | 0.50 | 0.11 |

| | | | | |
|---|---|---|---|---|
| (pbm = parts by mass) | | | | |

Films 2, 4, 6, 8, and 10 are films according to the present invention.

As shown in Figure 1, the light transmittance of a film according to the present invention is higher than the light transmittance of a conventionally prepared film having the same pigment content.

**Table 3**

| Pigment content in the film (mass%) | Light transmittance at 700 nm | |
|---|---|---|
| | MB-A | MB-C |
| 0.1 | 60 | 63 |
| 0.4 | 34 | 49 |
| 0.8 | 20 | 35 |
| 1.0 | 16 | 29 |
| 2.0 | 4 | 27 |

Table 3 shows that a high light transmittance can be achieved even at high pigment contents in the case of using masterbatch MB-C. The difference between the masterbatches is particularly pronounced at elevated pigment contents.

**Table 4**

| Pigment content in the film (mass%) | Light transmittance at 700 nm | |
|---|---|---|
| | MB-B | MB-C |
| 0.1 | 65 | 63 |
| 2.0 | 16 | 27 |

Table 4 shows the advantageous effect of using a masterbatch having a pigment content of less than 30 mass% in comparison to using a masterbatch having a pigment content of higher than 30 mass%. The advantageous effect is particularly pronounced at pigment contents of higher than 1 mass%.

### Example 2

PVC films were prepared according to the method of the present invention. The first composition contained PVC, plasticizers, UV stabilizers and heat stabilizers. The masterbatch was prepared from the first composition and additionally contained pigments. After mixing the masterbatch and the second composition, the pigment content was about 0.1 mass%. A film was preparing by knife coating. The film was applied to a woven fabric or a knitted fabric to prepare a composite structure.

The composite structures showed high light transmittance. The change of the transmittance spectrum of the composite structures was tested after heating and after UV treatment. The transparency of the composite structures did not change significantly after heat treatment of 100 °C for 240 h or after UV treatments. The results for using a woven fabric and a knitted fabric were very similar. Regarding heat treatment of 120 °C for 500 h, the transparency of the composite structure containing a woven fabric was considerably reduced, while the effect on the composite structure containing a knitted fabric was less pronounced.

The preparation of the film was repeated as described above with the exception that a flame retardant was additionally contained. In the tests carried out as described above, the flame retardant had no significant effect.

The tests show that it is possible to prepare PVC films having high light transmittance and high resistance against heat and UV treatment.

## Claims

1. A method of preparing a film having a thickness of 0.05 to 1.50 mm and having a light transmittance of at least 1 % at λₘₐₓ, wherein λₘₐₓ is the wavelength within the range of 400 nm to 700 nm of the maximum transmittance, the method comprising the following steps:
(a) providing a polymer selected from at least one thermoplastic polymer;
(b) using the polymer to prepare a first composition containing the polymer and a second composition containing the polymer;
(c) mixing the first composition and a pigment to obtain a masterbatch containing 1 mass% to less than 30 mass% of the pigment;
(d) mixing the second composition and the masterbatch to obtain a film raw material having a pigment content of 0.05 mass% to 4.0 mass%; and
(e) processing the film raw material to obtain the film.

2. The method according to claim 1, wherein the first composition and the second composition prepared in step (b) have identical composition.

3. The method according to claim 1 or 2, wherein the polymer provided in step (a) is one or more selected from the group consisting of a thermoplastic elastomer, a thermoplastic polyurethane, a thermoplastic polyolefin, and a polyvinyl chloride.

4. The method according to any of the preceding claims, wherein the first composition, the second composition, and the masterbatch contain the polymer provided in step (a) in molten form, and either mixing in step (d) is carried out in an extruder and processing in step (e) comprises extruding and solidifying the film raw material; or processing in step (e) comprises knife coating.

5. The method according to any of the preceding claims, wherein the film has a thickness of 0.1 to 1.0 mm and a light transmittance of at least 10 % at λₘₐₓ, the pigment content of the masterbatch is 2 mass% to 25 mass%, and the pigment content of the film is 0.05 mass% to 2.0 mass%.

6. A film obtainable by the method of one of claims 1 to 5.

7. A film made of a polymer selected from at least one thermoplastic polymer, wherein the film has a thickness of 0.3 to 1.5 mm, a pigment content of 0.05 to 4.0 mass%, and a light transmittance of at least 1 % at λₘₐₓ, wherein λₘₐₓ is the wavelength within the range of 400 nm to 700 nm of the maximum transmittance, wherein the film has at least one of the following properties (i) to (iii):
(i) the number of particles having a size of more than 1 µm in any surface area of 0.01 mm² of the film is less than 10, as measured by Scanning Electron Microscopy carried out by sputtering the sample for 60 s with pure gold using a Cressington Sputter Coater 180 Auto; treating the sample at high vacuum with electron beam at 10-20 keV using a SEM JEOL JSM 6010 LV; and detecting the secondary electrons;(ii) the ratio of the light transmittance at λₘₐₓ between any two areas of 1 mm² of the film is in the range of 9/10 to 10/9;
(iii) if the pigment content is 2.5 to 4.0 mass%, the light transmittance at λₘₐₓ is at least 1 %; if the pigment content is more than 1.50 mass% to less than 2.5 mass%, the light transmittance at λₘₐₓ is at least 10 %; if the pigment content is less than 0.30 mass%, the light transmittance at λₘₐₓ is at least 40 %; if the pigment content is in the range of 0.30 mass% to 1.50 mass%, the product of the light transmittance (unit: %) at λₘₐₓ and the concentration of the pigment (unit: mass%) is more than 15.

8. The film according to claim 7, wherein the film has at least one of the following properties (i) to (iii):
(i) the light transmittance of the film at λₘₐₓ is at least 10 % and the number of particles having a size of more than 1 µm in any surface area of 0.01 mm² of the film is less than 5, as measured by the Scanning Electron Microscopy carried out by sputtering the sample for 60 s with pure gold using a Cressington Sputter Coater 180 Auto; treating the sample at high vacuum with electron beam at 10-20 keV using a SEM JEOL JSM 6010 LV; and detecting the secondary electrons;
(ii) the film has a thickness of 0.3 to 1.0 mm, the content of the pigment in the film is 0.05 to 1.0 mass%, the light transmittance of the film at λₘₐₓ is at least 20 %, and the ratio of the light transmittance at λₘₐₓ between any two areas of 1 mm² of the film is in the range of 19/20 to 20/19;
(iii) the film has a thickness of 0.3 to 1.0 mm, the content of the pigment in the film is 0.05 to 1.0 mass%, the light transmittance of the film at λₘₐₓ is at least 20 %, and if the pigment content is less than 0.30 mass%, the light transmittance of the film at λₘₐₓ is at least 40 %; if the pigment content is in the range of 0.30 mass% to 1.0 mass%, the product of the light transmittance (unit: %) at λₘₐₓ and the concentration of the pigment (unit: mass%) is at least 15.

9. The film according to any of claims 6 to 8, wherein the ratio of the number of particles having a size of more than 1 µm in any surface area of 0.01 mm² of the film to the pigment content (unit: mass%) is less than 10.

10. The film according to any of claims 6 to 9, wherein the film is opaque in the absence of light emitted from the rear side.

11. The film according to any of claims 6 to 10, wherein the product of the concentration of the pigment [mass%] and the thickness of the film [mm] is less than 1.0, preferably less than 0.5.

12. A composite structure comprising the film as described in any of claims 6 to 11.

13. The composite structure according to claim 12, comprising the film as a cover layer and one or more additional layers or elements arranged at the underside of the cover layer, wherein an optional pattern layer is directly connected to the topside of the cover layer and/or wherein an optional lacquer layer having a thickness of 5 µm to 40 µm is directly coated on the topside of the cover layer.

14. The composite structure according to claim 13, comprising a pattern layer directly connected to the underside of the cover layer, and a support layer at the underside of the cover layer.

15. The use of a film as described in any of claims 6 to 12 or a composite structure as described in claim 13 or 14 as a coating in the interior of a vehicle.
